# EUROPEAN PATENT APPLICATION

(11) **EP 1 870 887 A2**
(43) Date of publication of application: **26.12.2007**
(21) Application number: 07011913.6
(22) Date of filing: 18.06.2007
(51) Int. Cl.: G11B 7/09, G11B 7/0037

(54) **Method and optical disk recording/drawing apparatus**

(30) Priority: 19.06.2006 JP 2006168838
(71) Applicant: YAMAHA CORPORATION, Naka-ku Hamamatsu-shi Shizuoka-ken (JP)
(72) Inventor: Yamada, Seiya, Hamamatsu-shi Shizuoka (JP); Fushiki, Tatsuo, Hamamatsu-shi Shizuoka (JP); Itoga, Hisanori, Hamamatsu-shi Shizuoka (JP)
(74) Representative: Geyer, Ulrich F.

(57) **Abstract**

A liquid crystal optical device (liquid crystal lens) is located along the optical axis of one of two laser beams emitted by an optical pickup. The two laser beams (20,22), which are respectively modulated using a recording pulse and a drawing pulse, are coaxially emitted through the objective lens (18) of the optical pickup, while the focal points are shifted in the light axial direction. A drawing layer (26) and a data recording layer (36) are laminated on an optical disk (12), and by controlling voltages applied to the liquid crystal optical device, the distance between the focal positions of the two beams is adjusted so that the distance equals the distance between the two layers. While this adjusted state is maintained, one of the laser beams is focused on one of the layers by a focusing actuator, and data recording and drawing are simultaneously performed.

## Description

### BACKGROUND OF THE INVENTION

The present invention relates to a recording and drawing method and an apparatus in which two beams are emitted through a single objective lens of a signal optical pickup while the focal points of the two beams are shifted in a light axial direction, and for an optical disk on which a data recording layer and a drawing layer are arranged at different levels in the direction of thickness, data is recorded on the data recording layer with one of the beams and a visible image is simultaneously formed (drawn) on the drawing layer with the other beam (hereinafter this procedure is referred to as a "simultaneous recording/drawing process"). According to the invention, the focal states of the two beams are appropriately controlled for their respective, corresponding layers to enable the performance of the simultaneous recording/drawing process.

A conventional technique is disclosed in patent document 1. A drawing layer, provided as either a thermosensitive layer or a photosensitive layer, is formed on the face of an optical disk, such as a recordable CD or a recordable DVD, and an optical disk recording apparatus for recording data on a data recording layer of the optical disk is employed as an optical disk drawing apparatus. For the drawing, a laser beam modulated in accordance with image data is emitted by an optical pickup and irradiates the drawing layer. According to the technique described in patent document 1, two laser beams are coaxially emitted by a single optical pickup, and one is used to irradiate the data recording layer and record data, while providing focusing and tracking control for the data recording process. Paralleling this data recording, the laser beam is also employed to detect positioning information on the data recording layer, and based on the detected positioning information, the other laser beam is employed to perform drawing at predetermined locations on the drawing layer (e.g., simultaneous recording/drawing is performed).

Patent Document 1: JP-A-2005-346886

According to the technique described in patent document 1, the optical system of the optical pickup is so arranged that when one beam is focused on the data recording layer by focusing control, the other beam is precisely focused on the drawing layer. It is difficult, however, for an optical system to be designed so that two beams can be emitted in focal states appropriate for both the corresponding layers. Even if an optical system can be designed to operate in an ideal state, the distance between the data recording layer and the drawing layer may vary for each disk, dependant on variation in the thickness of a substrate positioned between the two layers. Thus, for a disk in use, an appropriate focal state might not be obtained for a layer corresponding to one of the beams.

### SUMMARY OF THE INVENTION

In order to resolve the shortcoming of the conventional art, one objective of the present invention is to provide an optical disk recording/drawing method for adjusting both beams so their focal states are appropriate for their corresponding layers and the simultaneous recording/drawing process is enabled, and an optical disk recording/drawing apparatus therefor.

In order to achieve the object, the present invention provides the following arrangements.
(1) A method of simultaneously recording data and forming a visible image on an optical disk which includes a data recording layer and a drawing layer which is arranged at a position different from the data recording layer in a thickness direction, the method comprising
   emitting two beams through an objective lens of an optical pickup to the data recording layer and the drawing layer so that focal points of the two beams are shifted relative to each other in an axial direction of the beams;
   detecting focal states of the two beams on the data recording layer and the drawing layer;
   adjusting a distance between the focal points of the two beams by an inter-focusing distance adjustment mechanism based on the detected focal states;
   performing focus control by a focus adjustment mechanism which is provided in the optical pickup and moves the objective lens in the axial direction based on one of the two beams in a state that the distance between the focal points of the two beams is adjusted by the inter-focusing distance adjustment mechanism; and
   simultaneously recording the data on the data recording layer and forming the visible image on the drawing layer by two beams.
(2) The method according to (1), wherein
   the distance between the focal points of the two beams is adjusted before the data recording and the visible image forming are performed, and
   during the data recording and the visible image forming, the distance between the focal points of the two beams is maintained as a value obtained prior to the performance of the data recording and the visible image forming.
(3) The method according to (1), wherein the distance between the focal points of the two beams is adjusted during the data recording and the visible image forming.
(4) The method according to any one of (1) to (3), wherein the inter-focusing distance adjustment mechanism adjusts the distance between the focal points of the two beams so that one of the two beams is focused on one of the data recording layer and the drawing layer in a desired state while the focusing adjustment mechanism focuses the other beam on the other of the data recording layer and the drawing layer.
(5) The method according to any one of (1) to (4), wherein the focusing adjustment mechanism performs the focusing control using the beam emitted for the data recording during the data recording and the visible image forming.
(6) The method according to any one of (1) to (5), wherein tracking control is performed using the beam emitted for the data recording during the data recording and the visible image forming.
(7) The method according to any one of (1) to (6), wherein during the data recording and the visible image forming, reproduction power and recording power are detected for the two beams and servo loop is formed so that predetermined values for the reproduction power and the recording power of the two beams are maintained.
(8) The method according to any one of (1) to (6), wherein during the data recording and the visible image forming, reproduction power and recording power are detected for the beam emitted for the data recording and a servo loop is formed so that predetermined values for the reproduction power and the recording power for the beam are maintained, and fixed driven values are employed for reproduction power and recording power for the beam emitted to the visible image forming without forming a servo loop.
(9) An optical disk recording/drawing apparatus for simultaneously recording data and forming a visible image on an optical disk which includes a data recording layer and a drawing layer which is arranged at a position different from the data recording layer in a thickness direction, the apparatus comprising:
   an optical pickup including
      an objective lens which passes two beams whose focal points are shifted relative to each other in an axial direction thereof,
      a focusing adjustment mechanism that moves the objective lens in the light axial direction to perform focusing adjustment, and
      an inter-focusing distance adjustment mechanism that adjusts a distance between focal points of the two beams;
   a focusing control circuit that controls the focusing adjustment mechanism for performing focusing control;
   an inter-focusing distance adjustment circuit that controls the inter-focusing distance adjustment mechanism for adjusting the distance between the focal points of the two beams; and
   a controller that controls the optical pickup, the focusing control circuit and the inter-focusing distance adjustment circuit in such a manner that the optical pickup emits the two beams to the data recording layer and the drawing layer, the inter-focusing distance adjustment circuit controls the inter-focusing distance adjustment mechanism to adjust the distance between the focal points of the two beams by detecting focal states of the two beams, and the focusing control circuit controls the focusing adjustment mechanism to perform the focus control based on one of the two beams in a state that the distance between the focal points of the two beams is adjusted by the inter-focusing distance adjustment mechanism.
(10) The apparatus according to (9), wherein the inter-focusing distance adjustment mechanism includes a liquid crystal optical device arranged along a light axis of a beam that is not used for focusing control during the data recording and the visible image forming.
(11) The apparatus according to (9) or (10), wherein
   the controller performs CAV control for a spindle motor so that an FG pulse generated by the spindle motor is synchronized with a predetermined reference clock, and
   the controller generates a drawing pulse for modulating the beam for the visible image forming in synchronization with the reference clock, and a recording pulse for modulating the beam for the data recording in synchronization with a wobble signal that is detected from the optical disk.
(12) The apparatus according to one of (9) to (10), wherein
   the controller permits a drawing operation on the drawing layer with a condition that identification information representing the optical disk that includes a drawing layer is obtained from information recorded on the data recording layer, and
   the controller inhibits the drawing operation with a condition that the identification cannot be obtained from information recorded on the data recording layer.
(13) The apparatus according to one of (9) to (12), wherein the apparatus is capable of recording data while one of the two beams is employed for the focusing control and tracking control for the data recording layer when the optical disk includes the data recording layer and does not include the drawing layer.

### BRIEF DESCRIPTION OF THE DRAWINGS

Fig. 1 is a block diagram showing a system configuration of an optical disk apparatus 10 that includes a drawing function according to the present invention.
Fig. 2 is a schematic cross-sectional view of an example layer structure of a standard CD optical disk of a recordable/drawable type, which can be used for a drawing method according to the present invention, and the focal states of two laser beams.
Fig. 3 is a schematic cross-sectional view of a modification of the standard CD optical disk of the recordable/drawable type shown in Fig. 2, and the focal states of two laser beams.
Fig. 4 is a schematic cross-sectional view of another example layer structure for a standard DVD optical disk of a recordable/drawable type, which can be used for the drawing method according to this invention, and the focal states of two laser beams.
Fig. 5 is a schematic diagram showing an example arrangement for the optical system of an optical pickup 16 shown in Fig. 1.
Fig. 6 is a front view of an example structure of a liquid crystal correction device 53.
Figs. 7A and 7B are cross sectional views of the operation performed by the liquid crystal correction device 53 to adjust a focal position.
Fig. 8 is a block diagram showing an example arrangement of a section of a servo circuit 37, in Fig. 1, related to focusing control, the adjusting of inter-focusing distance between two beams, and tracking control and thread feeding control.
Fig. 9 is a block diagram showing an example arrangement of drive circuits (an ALPC circuit 39 and a laser driver 27 in Fig. 1) for a CD laser diode 50 and a DVD laser diode 52 in Fig. 5.
Fig. 10 is a schematic diagram showing example pixel arrays used to form an image that is to be drawn on the drawing layer of an optical disk 12 in Fig. 1.
Fig. 11 is a waveform diagram showing an example drawing pulse for simultaneous recording/drawing according to the present invention.
Fig. 12 is a flowchart showing the simultaneous recording/drawing processing performed by the system configuration shown in Fig. 1.
Figs. 13A and 13B are schematic diagrams showing two cases for simultaneous recording/drawing that are taken into account for the processing in Fig. 12.
Fig. 14 is a diagram showing an ATIP data structure of a CD-R.
Fig. 15 is a flowchart showing example drawable disk determination processing performed by the optical disk apparatus 10, in Fig. 1, when drawable disk identification information is to be recorded on a data recording layer.

- 10:: optical disk apparatus including a drawing function (optical disk recording/drawing apparatus)
- 12:: optical disk
- 12a:: laser incident surface
- 12b:: label surface
- 14:: spindle motor
- 16:: optical pickup
- 18:: objective lens
- 20:: CD laser beam
- 19:: controller
- 22:: DVD laser beam
- 26:: drawing layer
- 34:: groove (track)
- 36:: data recording layer
- 37:: servo circuit (focusing control circuit, inter-focusing distance adjusting circuit)
- 53:: liquid crystal correction circuit device (inter-focusing distance adjustment mechanism)
- 72:: light receiving device provided as a CD light front monitor
- 73:: light receiving device provided as a CD light front monitor
- 74:: focusing actuator (focusing adjustment mechanism)
- 76:: tracking actuator
- fa, fb, f0:: focal position

### DETAILED DESCRIPTION OF PREFERRED EMBODIMENTS

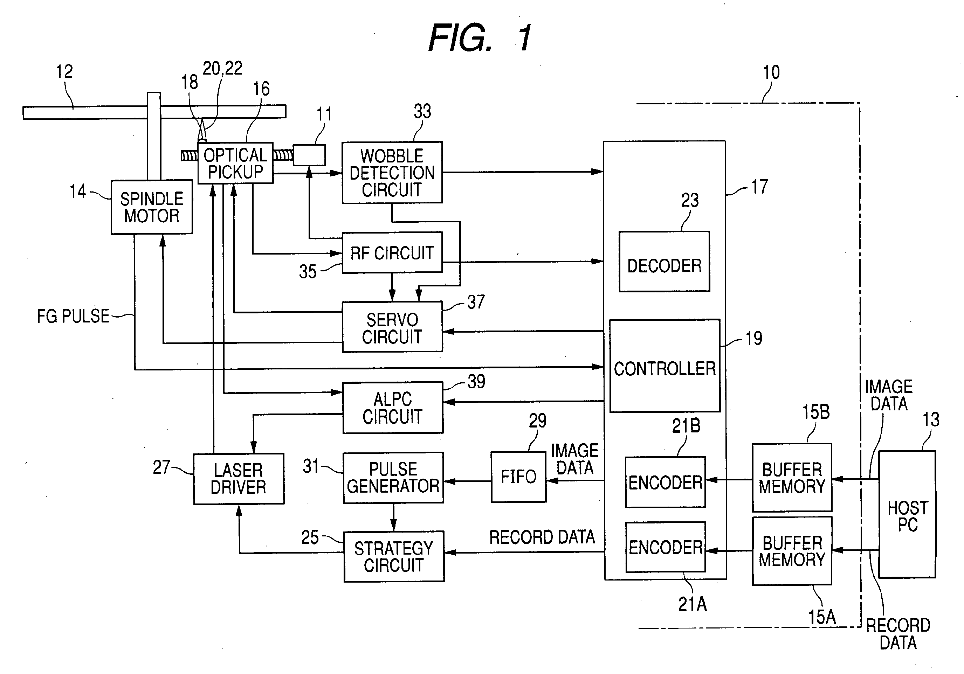

A first embodiment of the present invention will be described. Fig. 1 is a diagram showing the system configuration of an optical disk apparatus 10 having a drawing function according to the present invention. The optical disk apparatus 10 can perform data recording and reproduction for existing, standard CD disks and perform data recording and reproduction for existing, standard DVD disks. The optical disk apparatus 10 can perform data recording exclusively (hereinafter referred to as "exclusive data recording") and simultaneous data recording/drawing and data reproduction for optical disks of a standard CD recordable and drawable type. The optical disk apparatus 10 can perform exclusive data recording, simultaneous recording/drawing and data reproduction for optical disks of a standard DVD recordable and drawable type. As will be described later, optical disks of a standard CD recordable/drawable type and optical disks of a standard DVD recordable/drawable type are disks on each of which a data recording layer and a drawing layer are laminated, and for which data recording and reproduction are performed for the data layer, while drawing is performed for the drawing layer.

An optical disk 12 is rotated by a spindle motor 14. The spindle motor 14 outputs a predetermined number of FG pulses at equal angle intervals in one revolution. An optical pickup 16 is moved by a thread feeding motor 11 in the radial direction of the optical disk 12. Two laser beams 20 and 22 (both of them called main beams), emitted by two laser diodes, are coaxially transmitted through an objective lens 18 of the optical pickup 16, so that the focal points of these beams on the optical disk 12 are shifted, relative to each other, in the light axial direction a fixed distance that is approximately the distance between the data recording layer and the drawing layer. The distance between the focal points of the laser beams 20 and 22 (hereinafter referred to as an inter-focusing distance) can be adjusted, as will be described later. In this embodiment, the laser beam 20 is used for a CD, and the laser beam 22 is used for a DVD.

A host computer 13 transmits record data, such as music data, to exclusively perform data recording, or transmits record data and image data to simultaneously perform recording/drawing in a time sharing manner. The record data and the image data are transferred to the optical disk apparatus 10, and are respectively transmitted to a signal processor 17 via buffer memories 15A and 15B. The signal processor 17 is a DSP (Digital Signal Processor) and includes a controller 19, encoders 21 A and 21 B and a decoder 23. The encoder 21 A encodes the record data received by the signal processor 17 (when the optical disk 12 is a standard CD disk, EFM modulation is performed, and when the optical disk 12 is a standard DVD disk, 8/16 modulation is performed). A strategy circuit 25 performs an appropriate time axis correction for the encoded record data (a binary recording pulse having a signal level of "1" or "0"), and transmits the recording pulse to a laser driver 27. In accordance with the recording pulse, the laser driver 27 supplies a drive current to a laser diode (a CD laser diode for CD data, or a DVD laser diode for DVD data) in the optical pickup 16, so that data is recorded on the data recording layer of the optical disk 12.

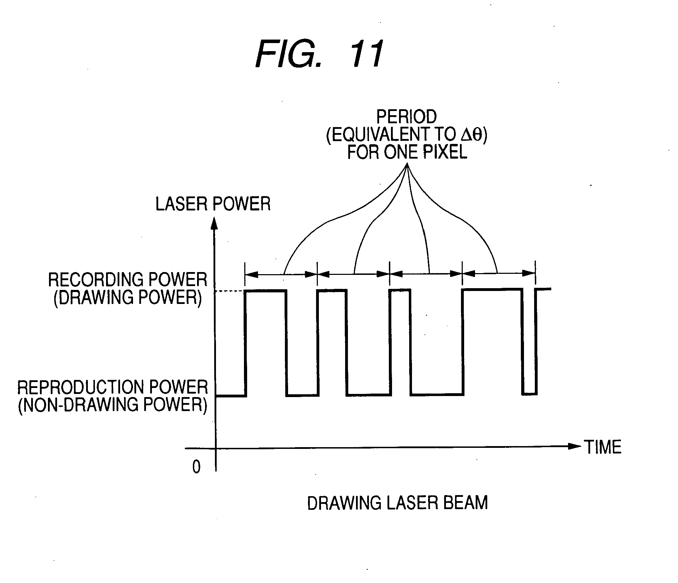

The encoder 21 B performs appropriate encoding for the image data received by the signal processor 17, and transmits the image data via an FIFO (First-In First-Out) memory 29 to a pulse generator 31. Based on the received image data, the pulse generator 31 generates a binary pulse signal (a drawing pulse) of "1" or "0" for each pixel that constitutes the image data. That is, the image data are data (gradient data) representing the gradation of each pixel that is drawn, and the pulse generator 31 sequentially generates a drawing pulse, for which a constant drawing period is allocated for each pixel and the duty factor is changed in accordance with the gradient data for the individual pixels (see Fig. 11). The strategy circuit 25 performs an appropriate time axial correction for the drawing pulse generated by the pulse generator 31, and transmits the drawing pulse to the laser driver 27. In accordance with the drawing pulse, the laser driver 27 drives the laser diode (a CD laser diode or a DVD laser diode) in the optical pickup 16 to perform the drawing on the drawing layer of the optical disk 12. Each pixel to be drawn is visually identified as a single point (a dot), and differences in the duty factors of the individual dots appear visually to be drawing density differences (as the duty factors become higher, a drawing appears to be darker). Therefore, drawing using monochromatic multi-tones is provided. The strategy circuit 25 can simultaneously perform time axial corrections for both the recording pulse and the drawing pulse, and the laser driver 27 can simultaneously drive the CD laser diode, using either a recording pulse or a drawing pulse, and the DVD laser diode, using the other pulse.

A wobble detection circuit 33 detects a wobble signal in a return light signal for a laser beam that is used for the optical pickup 16 during the exclusive data recording, the simultaneous recording/drawing or the data reproduction processing. An RF circuit 35 amplifies the return light signal (RF signal) for the laser signal that is used for the optical pickup 16 in the exclusive data recording, the simultaneous recording/drawing or the data reproduction processing. The decoder 23 of the signal processor 17 decodes the RF signal (EFM demodulation when the optical disk 12 is a standard CD disk, or 8/16 demodulation when the optical disk 12 is a standard DVD disk) and demodulates the recorded data, and the demodulated data is transmitted to the host computer 13 via the buffer memory (the buffer memory 15A or a separately provided buffer memory (not shown)).

A servo circuit 37 provides focusing control, tracking control and thread feeding control for the optical pickup 16 based on the light returned for a laser beam (the light returned for the CD laser beam 20 during the recording and reproduction of CD data, or the light returned for the DVD laser beam 22 during the recording and reproduction of DVD data) that is used for the optical pickup 16 during the exclusive data recording, the simultaneous recording/drawing and the data reproduction process. Further, during the exclusive data recording, the servo circuit 37 controls the spindle motor 14 and maintains a constant linear velocity (CLV) based on a wobble signal, while during the simultaneous recording/drawing, the servo circuit 37 controls the spindle motor 14 and maintains a constant number of revolutions (constant angular velocity) (CAV) based on FG pulses output by the spindle motor 14. Then, during the data reproduction process, the servo circuit 37 controls the spindle motor 14 and maintains a constant linear velocity based on a reproduction lock reproduced from a wobble signal or an RF signal. As will be described later, the servo circuit 37 adjusts the inter-focusing distance for the two laser beams 20 and 22 before the simultaneous recording/drawing is started, and the adjusted inter-focusing distance is maintained until the simultaneous recording/drawing has been completed (may be maintained until the drawing is completed when the drawing is ended first).

An ALPC (Automatic Laser Power Control) circuit 39 forms a servo loop based on the power of a laser detected by a front monitor in the optical pickup 16, and during the exclusive data recording, controls the laser driver 27, so that the reproduction power and the recording power of a laser beam used for data recording can match values instructed by the controller 19. Then, during the simultaneous recording/drawing, the reproduction power and recording power used for a laser beam employed for data recording and the reproduction power (non-drawing power) and recording power (drawing power) of a laser beam used for drawing can match values instructed by the controller 19, and during the data reproduction, the reproduction power of a laser beam used for data reproduction can match a value instructed by the controller 19.

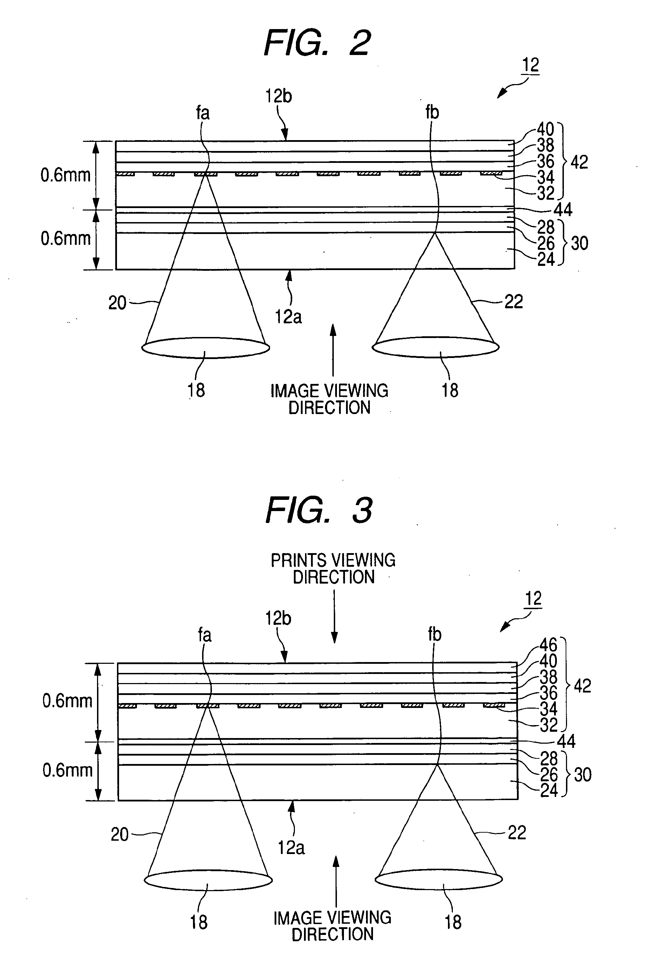

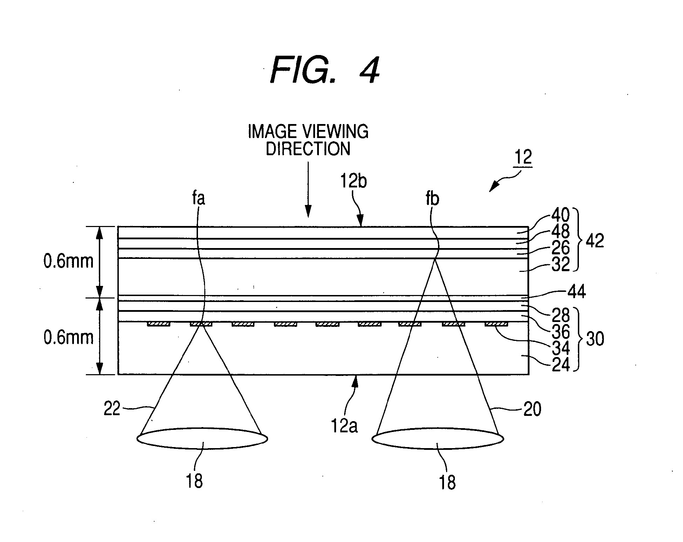

Example layer structures for drawable type optical disks that can be employed for the drawing method of this invention will be described with reference to Figs. 2 to 4. A standard CD recordable/drawable type optical disk is shown in Figs. 2 and 3, and a standard DVD recordable/drawable type optical disk is shown in Fig. 4. For both of the optical disks 12 in Figs. 2 to 4, the laser beams 20 and 22, whose wavelengths and focal points differ, can be received from the same face to perform the data recording and the data reproduction for the data recording layer and to perform the drawing for the drawing layer. The surface through which the laser beams 20 and 22 for the optical disk 12 enter is called a "laser incident surface 12a", and the opposite surface is called a "label surface 12b". The states shown in Figs. 2 to 4 are those during the simultaneous recording/drawing processing whereby data recording is performed on the data recording layer using one of the laser beams 20 and 22, and drawing is performed for the drawing layer using the other laser beam. For convenience sake, in the explanation the laser beams 20 and 22 are positioned at a distance; actually, however, the laser beams 20 and 22 are coaxially emitted by one objective lens 18.

In Figs. 2 to 4, the drawing layer is formed of a material, such as a thermosensitive material or a photosensitive material, having a visible radiation characteristic that is changed by irradiation with a laser beam. For this drawing layer, the same dye material can be employed as is used for the data recording layer, for example. A wobble groove is formed as a track in the data recording layer, while no track is formed in the drawing layer. As for the arranging order of the data recording layer and the drawing layer, either the data recording layer may be located near the laser incident side, or the drawing layer may be located near the laser incident side. For the laser irradiation of a layer to the rear of the laser incident side, a laser beam is transmitted through the layer at the front. Referring to the layer structures shown in Figs. 2 to 4, the drawing layer is located nearer than the recording layer to the direction in which an image drawn on the drawing layer can be seen, so that the image can be easily identified. And for the standard CD recordable/drawable type optical disk 12 shown in Figs. 2 and 3, instead of the single 1.2 mm thick substrate that is employed for a normal CD-R disk, two substrates, each of which is 0.6 mm thick, are prepared and are mutually adhered with a drawing layer being interposed between them. For the standard DVD recordable/drawable type optical disk 12 shown in Fig. 4, a drawing layer has been additionally formed. In Figs. 2 to 4, the same reference numerals are employed for those portions that are used in common.

The optical disks 12 in Figs. 2 to 4 will now be described.

### <<Example layer structure 1 for an optical disk: Fig. 2>>

For the CD standard recordable/drawable type optical disk 12 in Fig. 2, a drawing layer 26 and a translucent reflecting layer 28 for focusing control are sequentially laminated on a surface of a polycarbonate substrate 24, 0.6 mm thick, in which no groove is formed, and a first substrate 30 is thus obtained. Further, a data recording layer 36, a reflecting layer 38 and a protective layer 40 are sequentially formed on the surface of a polycarbonate substrate 32 that is 0.6 mm thick, to thus obtain a second substrate 42. Then, the first substrate 30 and the second substrate 42 are adhered together using a transparent adhesive layer 44, and the entire, 1.2 mm thick structure is obtained.

The CD laser beam 20 is employed for the exclusive data recording and the data reproduction for the data recording layer 36. At this time, focusing control and tracking control are provided by using the CD laser beam 20, and thread feeding control is provided based on the direct current component of a tracking error signal. For the simultaneous recording/drawing, data recording on the data recording layer 36 is performed using the CD laser beam 20, while at the same time, drawing on the drawing layer 26 is performed using the DVD laser beam 22. At this time, focusing control and tracking control are provided by using the CD laser beam 20, and thread feeding control is provided based on the direct current component of the tracking error signal. In this case, during the initial adjustment process, which will be described later, that is performed prior to the simultaneous recording/drawing operation, the distance in the light axial direction between focal points fa and fb of the two laser beams 20 and 22 is already adjusted to the distance (0.6 mm) between the data recording layer 36 and the drawing layer 26, or a fixed distance near that distance. Therefore, drawing is naturally performed in a state that the DVD laser beam 22 is fully or almost fully focused on the drawing layer 26. Further, since the DVD laser beam 22 is moved in the radial direction of the disk, together with the CD laser beam 20, which is under tracking control, drawing on the drawing layer 26 is performed with a radial direction density that corresponds to the track pitch (pitch of a groove 34) of the data recording layer 36. A visible image that is drawn can be seen from the side of the laser incident surface 12a.

### <<Example layer structure 2 for an optical disk: Fig. 3>>

The CD standard recordable/drawable type optical disk 12 in Fig. 3 is a modification of the optical disk 12 in Fig. 2. A printing layer 46 on which a different image is printed in advance (or that a user can print) is laminated on the topmost protective layer 40. That is, a disk maker or a disk dealer or distributor can print any image in advance on the printing layer 46. Or, a solid white printing layer 46 may be formed, so that a user can use a printer to print any image on the printing layer 46. The exclusive data recording, the simultaneous recording/drawing and the data reproduction are performed in the same manner as for the optical disk 12 in Fig. 2. A visible image drawn on the drawing layer 26 can be seen from the side of the laser incident surface 12a, and an image printed on the printing layer 46 can be seen from the side of the label surface 12b.

### <<Example layer structure 3 for an optical disk: Fig. 4>>

The DVD standard recordable/drawable type optical disk 12 in Fig. 4 is a DVD-R(+R) on which a drawing layer is additionally formed. For this optical disk 12, a data recording layer 36 and a translucent reflecting layer 28 for focusing control are sequentially laminated on the surface of a 0.6 mm polycarbonate substrate 24 on which a groove 34 is formed, and thus, a first substrate 30 is obtained. Further, a drawing layer 26, a translucent reflecting layer 48 for focusing control and a protective layer 40 are sequentially laminated on the surface of a 0.6 mm thick polycarbonate substrate 32 which no groove is formed, and thus, a second substrate 42 is obtained. Then, the first substrate 30 and the second substrate 42 are adhered together by a transparent adhesive layer 44, and the entire 1.2 mm thick structure is obtained.

The DVD laser beam 22 is employed for the exclusive data recording and the data reproduction for the data recording layer 36. At this time, focusing control and tracking control are provided by using the DVD laser beam 22, and thread feeding control is provided based on the direct current component of a tracking error signal. For the simultaneous recording/drawing, data recording on the data recording layer 36 is performed using the DVD laser beam 22, while at the same time, drawing on the drawing layer 26 is performed using the CD laser beam 20. At this time, focusing control and tracking control are provided by using the DVD laser beam 22, and thread feeding control is provided based on the direct current component of a tracking error signal. In this case, during the initial adjustment process, which will be described later, that is performed prior to the simultaneous recording/drawing operation, the distance in the light axial direction between focal points fa and fb of the two laser beams 20 and 22 is already adjusted to the distance (0.6 mm) between the data recording layer 36 and the drawing layer 26, or a fixed distance that is near that distance. Therefore, drawing is naturally performed in a state that the CD laser beam 20 is fully or almost fully focused to the drawing layer 26. Further, since the CD laser beam 20 is moved in the radial direction of the disk, together with the DVD laser beam 22 that is under tracking control, the drawing on the drawing layer 26 is performed with a radial direction density that corresponds to the track pitch (the pitch of a groove 34) of the data recording layer 36. A visible image that has been drawn can be seen from the side of the label surface 12b through the translucent reflecting layer 48.

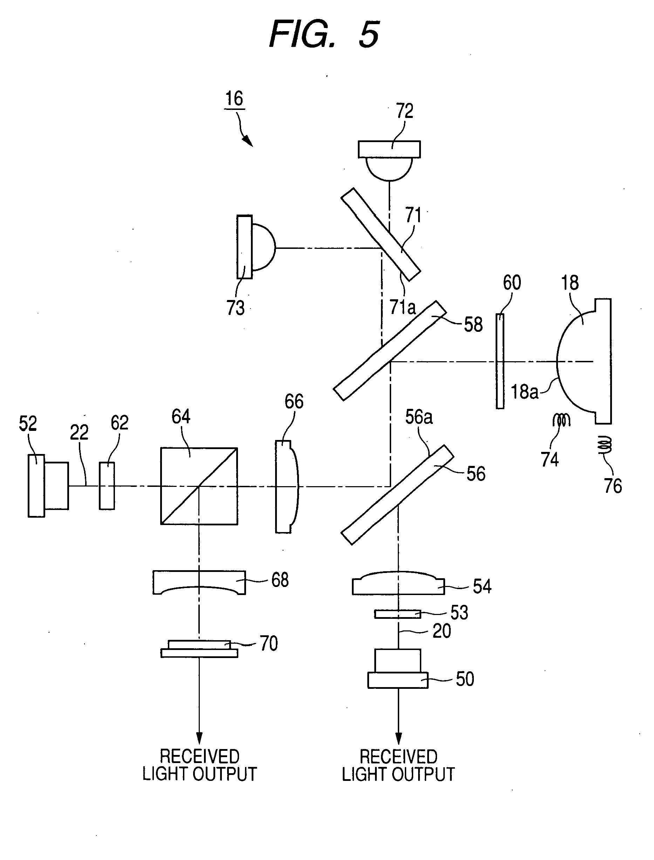

An example structure for the optical system of the optical pickup 16 is shown in Fig. 5. The optical pickup 16 includes: a CD laser diode 50, for emitting the CD laser beam 20 having a wavelength of 780 nm; and a DVD laser diode 52, for emitting the DVD laser beam 22 having a wavelength of 650 nm. The CD laser diode 50 is constituted by a hologram laser that includes a light receiving device. The CD laser beam 20, emitted by the CD laser diode 50, is passed through a liquid crystal correction device (a liquid crystal optical device and a liquid crystal lens) 53, and is changed into parallel light (or divergent light little different from parallel light) by a collimator lens 54. The parallel light passes through a beam splitter 56, and part of the light is reflected by a half mirror 58 and is transmitted through a quarter wave plate 60, and is output to the optical disk 12 through the objective lens 18, for which a numerical aperture is about 0.45. The numerical aperture of the objective lens 18 relative to the CD laser beam 20 can be set, for example, by adjusting the beam diameter of the CD laser beam 20 that enters the objective lens 18. The liquid crystal correction device 53 is used for the adjustment of the inter-focusing distance between the CD laser beam 20 and the DVD laser beam 22. Since the refractive index of the liquid crystal correction device 53 is changed by the external application of a voltage, the focal point of the laser beam 20 that passes through the liquid crystal correction device 53 can be moved for adjustment. That is, before the simultaneous recording/drawing is begun, the liquid crystal correction device 53 adjusts the inter-focusing distance between the CD laser beam 20 and the DVD laser beam 22, so that the simultaneous recording/drawing can be performed in a predetermined state that a laser beam used for data recording is focused on the data recording layer, and a laser beam used for drawing is focused on the drawing layer. When the inter-focusing distance between the CD laser beam 20 and the DVD laser beam 22 on the optical disk 12 is set near the distance (0.6 mm) between the data recording layer and the drawing layer in a state that a voltage is not applied to the liquid crystal correction device 53, the value required for the adjustment of the inter-focusing distance by the liquid crystal correction device 53 can be reduced.

The return light of the CD laser beam 20 reflected on the optical disk 12 enters through the objective lens 18 and passes through the quarter wave plate 60. Part of the return light is reflected by the half mirror 58, and the reflected light is transmitted through the beam splitter 56 and is converged by the collimator lens 54. Then, the light passes through the liquid crystal correction device 53 and is received by the light receiving device of the CD laser diode 50 (a hologram laser including the light receiving device). Based on the light receiving signal emitted by the light receiving device, tracking error detection, focusing error detection, wobble detection, clock reproduction and record data demodulation are performed.

The DVD laser beam 22, emitted by the DVD laser diode 52, is transmitted through a diffraction grating 62 and a polarized beam splitter 64, and is changed to parallel light by a collimator lens 66. Then, the parallel light is reflected by the beam splitter 56, and part of the light is reflected by the half mirror 58. The reflected light is passed through the quarter wave plate 60, and is output through the objective lens 18, coaxially with the CD laser beam 20, to the optical disk 12 through a numeral aperture of about 0.65. The numerical aperture of the objective lens 18 relative to the DVD laser beam 22 can be set, for example, by adjusting the beam diameter of the DVD laser beam 22 that enters the objective lens 18. The return light of the DVD laser beam 22 that is reflected by the optical disk 12 enters through the objective lens 18 and passes through the quarter wave plate 60. Part of the light is reflected by the half mirror 58, and is then reflected by the beam splitter 56. The reflected light is converged by the collimator lens 66, and is reflected by the polarized beam splitter 64. The reflected light then passes through a concave lens (detection lens) 68, and is received by a light receiving portion (light receiving device) 70. Based on the light receiving signal from the light receiving portion 70, tracking error detection, focusing error detection, wobble detection, clock reproduction and record data demodulation are performed. The beam splitter 56 is a mirror whose upper face 56a (a filter face) in Fig. 5 is a wavelength selective face, one characteristic of which is that upon entering the face 56a, the CD laser beam 20, which has a wavelength of 780 nm, is permitted to pass, whereas the DVD laser beam 22, which has a wavelength of 650 nm, is reflected.

The objective lens 18 has a ring-shaped diffraction structure (a blazed hologram) on its surface 18a, and corrects a spherical aberration caused by a difference in the thicknesses of the CD substrate and the DVD substrate. Further, in order to use the liquid crystal correction device 53 to reduce the adjustment value for the inter-focusing distance, the following methods can be employed whereby the inter-focusing distance between the CD laser beam 20 and the DVD laser beam 22 on the optical disk 12 is set near the distance (0.6 mm) between the data recording layer and the drawing layer in a state that a voltage is not applied to the liquid crystal correction device 53, i.e., a satisfactorily extended distance is set for the inter-focusing distance.
(a) The hologram of the objective lens surface 18a is designed to serve as the concave lens relative to the CD laser beam 20. With this arrangement, the focal point of the CD laser beam 20 is located at a distance from the focal point of the DVD laser beam 22.
(b) The collimator lenses 66 and 54 are designed and positioned so that, relative to the objective lens 18, the DVD laser beam 22 enters as parallel light (an infinite optical system), and the CD laser beam 20 enters as divergent light (a finite optical system). With this arrangement, the focal point of the CD laser beam 20 is located at a distance from the focal point of the DVD laser beam 22.

The CD laser beam 20 emitted by the CD laser diode 50 and the DVD laser beam 22 and the DVD laser diode 52 are partially transmitted through the half mirror 58 and enter the beam splitter 71. The beam splitter 71 is wavelength selective, and can be provided using the same component as for the beam splitter 56. That is, the beam splitter 71 which is a mirror whose lower face 71 a (filter face) in Fig. 5 is a wave selective face has a characteristic that when the CD laser beam 20, which has a wavelength 780 nm, enters the face 71 a it is permitted to pass, whereas the DVD laser beam 22, which has a wavelength of 650 nm, is reflected. The CD laser beam 20 that passes through the beam splitter 71 is received by a light receiving device 72, which constitutes a CD light front monitor, while the DVD laser beam 22 reflected by the beam splitter 71 is received by a light receiving device 73, which constitutes a DVD light front monitor.

The light receiving device 72 is used as a front monitor for the CD laser beam 20 for detecting the power of the laser output as the CD laser beam 20. That is, based on the light receiving signal from the light receiving device 72, the ALPC of the CD laser beam 20 is employed to control the emission power. Control of the recording power and the reproduction power is performed when data recording is to be performed using the CD laser beam 20; control of the reproduction power is performed when the reproduction is to be performed using the CD laser beam 20; and control of the recording power (the drawing power) and the reproduction power (the non-drawing power) is performed when the drawing is to be performed using the CD laser beam 20.

The light receiving device 73 is used as a front monitor for the DVD laser beam 22 to detect the power of the laser output as the DVD laser beam 22. That is, based on a light receiving signal output by the light receiving device 73, the ALPC for the DVD laser beam 22 is employed to control emission power. Control of the recording power and the reproduction power is performed when data recording is to be performed using the DVD laser beam 22; control of the reproduction power is performed when the reproduction is to be performed using the DVD laser beam 22; and control of the recording power (the drawing power) and the reproduction power (the non-drawing power) is performed when the drawing is to be performed using the DVD laser beam 22.

A focusing actuator 74, which is used in common for the CD laser beam 20 and the DVD laser beam 22, is driven based on a focusing error signal for a CD or a DVD laser beam, and moves the objective lens 18 in the focusing control direction. A tracking actuator 76, which is used in common for the CD laser beam 20 and the DVD laser beam 22, is driven based on a tracking error signal for a CD or a DVD laser beam, and moves the objective lens 18 in the tracking control direction. Since one of the laser beams is employed in the exclusive data recording process and the data reproduction process, the tracking control and the focusing control are provided based on a laser beam that is currently employed. In the simultaneous recording/drawing process, the tracking and the focusing controls are provided by using a laser beam employed for data recording. For simultaneous recording/drawing, focusing control can be provided by using a laser beam employed for drawing; however, accurate data recording is enabled when a laser beam used for data recording is employed to provide focusing control.

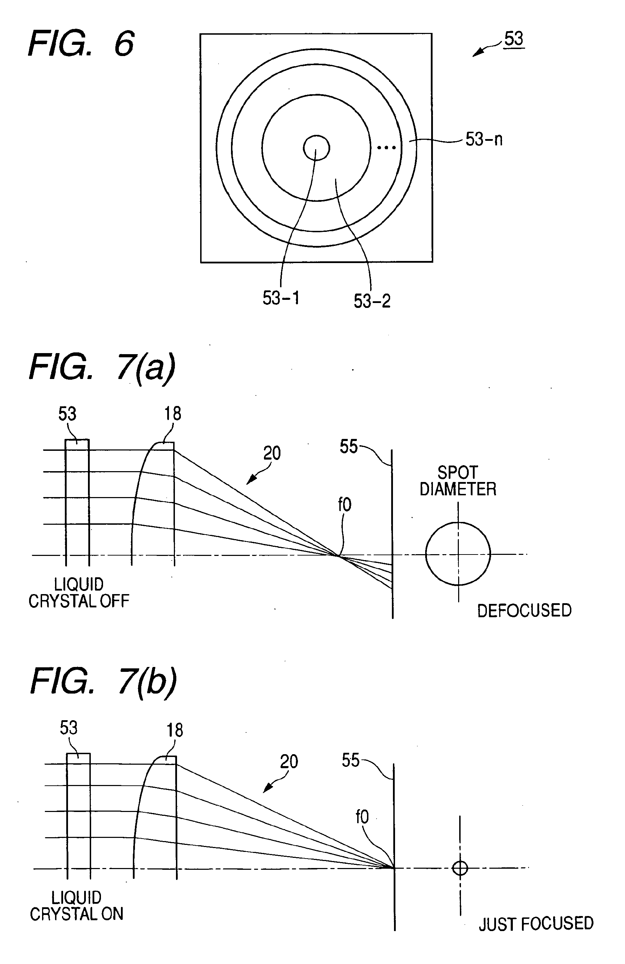

An example structure for the liquid crystal correction device 53 is shown in Fig. 6. The liquid crystal correction device 53 is a well known liquid crystal optical device (a liquid crystal lens). Transparent electrodes are arranged in a concentric pattern on the face through which the CD laser beam 20 passes, and divides the face into a plurality of liquid crystal areas 53-1, 53-2, .... to 53-n. When the refractive index is adjusted by controlling a voltage applied to the individual liquid crystal areas 53-1 to 53-n, the focal point of the CD laser beam 20 can be moved.

Figs. 7A and 7B are diagrams showing the operation of the liquid crystal correction device 53 for adjusting the focal point. In the state in Fig. 7A, a voltage has not yet been applied to the liquid crystal correction device 53. A focal point f0 of the CD laser beam 20 emitted by the objective lens 18 is shifted from a target focal point 55 (the data recording layer or the drawing layer). In this state, when a voltage is applied to the liquid crystal areas 53-1 to 53-n of the liquid crystal correction device 53, as shown in Fig. 7B, the focal point f0 of the CD laser beam 20 can match the target focal point 55.

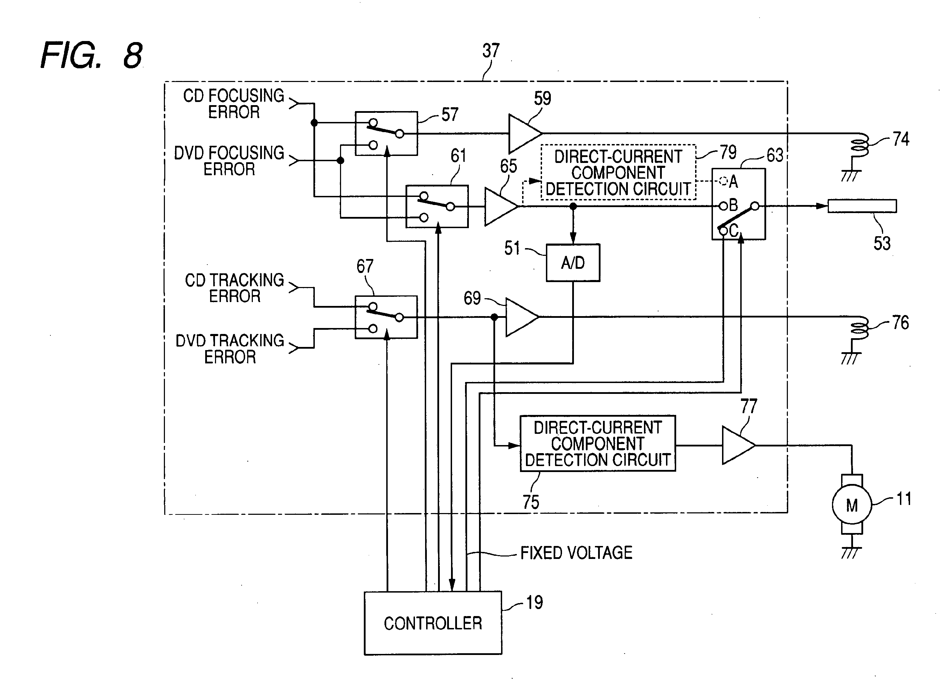

Fig. 8 is a diagram showing an example structure for the section of the servo circuit 37 in Fig. 1 related to focusing control, adjustment of the inter-focusing distance of two beams, tracking control and thread feeding control. To provide focusing control, a servo loop is formed, so that either a focusing error signal detected for a return light signal of the CD laser beam 20, or a focusing error signal detected for a return light signal of the DVD laser beam 22, is selected by a switch 57, the selected signal is transmitted to a drive circuit 59, and the focusing actuator 74 is driven by the drive circuit 59 to cancel a focusing error.

To adjust the inter-focusing distance between two beams, either a focusing error detected for a return light signal of the CD laser beam 20, or a focusing error signal detected for a return light signal of the DVD laser beam 22, is selected by a switch 61, and the liquid crystal correction device 53 is driven based on the selected signal. A switch 63 arranged along the path for a drive signal for the liquid crystal correction device 53 is used by the controller 19 to select a drive signal for the liquid crystal correction device 53. That is, the switch 63 is connected to a contact point B when adjustment of the inter-focusing distance is performed before the simultaneous recording/drawing operation is started. At this time, a servo loop is formed, so that a focusing error signal selected by the switch 61 drives the liquid crystal correction device 53 through the drive circuit 65 and the switch 63 in order to cancel a focusing error. Therefore; the inter-focusing distance of the two laser beams 20 and 22 is adjusted. When the adjustment has been completed, the current drive voltage value of the drive circuit 65 is converted into digital data by an A/D converter 51, and the digital data is stored in the controller 19. Thereafter, when the simultaneous recording/drawing is begun, the switch 63 is connected to a contact point C, and the controller 19 performs a D/A conversion for the drive voltage data that are stored and transmits the obtained fixed voltage to the contact point C of the switch 63. As a result, during the simultaneous recording/drawing operation, the liquid crystal correction device 53 is continuously driven at this fixed voltage, and the adjusted inter-focusing distance of the two laser beams 20 and 22 is maintained until the simultaneous recording/drawing has terminated.

To provide tracking control, a servo loop is formed, so that either a tracking error signal detected for a return light signal of the CD laser beam 20, or a tracking error signal detected for a return light signal of the DVD laser beam 22, is selected by a switch 67, the selected signal is then transmitted to a drive circuit 69, and the tracking actuator 76 is driven by the drive circuit 69 to cancel the tracking error. To provide thread feeding control, a servo loop is formed, so that a direct-current component detection circuit 75 detects a direct-current component for a tracking error signal selected by the switch 67, and a thread feeding motor (DC motor) 11 is driven by a drive circuit 77 to cancel the direct-current component.

The controller 19 of the signal processor 17 (Fig. 1) changes the switches 57, 61 and 67 in Fig. 8. In this example, during the simultaneous recording/drawing operation, a fixed value is maintained for the inter-focusing distance of the two laser beams 20 and 22 by using a fixed voltage output by the controller 19. However, to drive the liquid crystal correction device 53, a servo loop may be formed as indicated by broken lines in Fig. 8, so that the direct-current component detection circuit 79 detects the direct-current component of a focusing error signal (a focusing drive signal) that is not used for focusing control, and transmits the direct-current component to the contact point A of the switch 63, which is connected to the contact point A to cancel the direct-current component A.

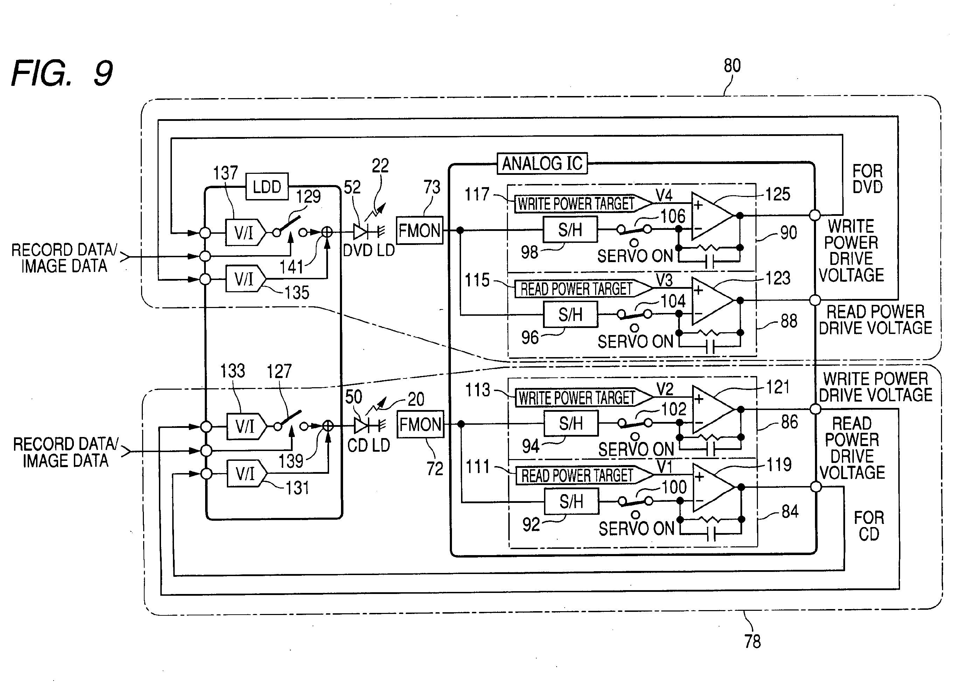

Fig. 9 is a diagram showing an example arrangement (an example arrangement for the ALPC circuit 39 and the laser driver 27 in Fig. 1) for the drive circuit of the CD laser diode 50 and the DVD laser diode 52 in Fig. 5. This circuit includes a CD laser diode drive circuit 78 and a DVD laser diode drive circuit 80. Since either the CD laser diode 50 or the DVD laser diode 52 is employed for exclusive data recording or data reproduction, one of the laser diodes is halted (turned off). For the simultaneous recording/drawing, both of the laser diodes 50 and 52 are employed, and the connection states (all ON) of servo switches 100, 102, 104 and 106 in Fig. 9 are those employed for the simultaneous recording/drawing operation.

A CD reproduction (read) power drive voltage output circuit 84, for outputting a reproduction power drive voltage, and a CD recording (write) power drive voltage output circuit 86, for outputting a recording power drive voltage, are arranged in parallel in the CD laser diode drive circuit 78. A DVD reproduction power drive voltage output circuit 88, for outputting a reproduction power drive voltage, and a DVD recording power drive voltage output circuit 90, for outputting a recording power drive voltage, are arranged in parallel in the DVD laser diode drive circuit 80. The drive voltage output circuits 84, 86, 88 and 90 respectively include: sample-hold circuits 92, 94, 96 and 98; the servo switches 100, 102, 104 and 106; setting units 111, 113, 115 and 117; and amplifiers 119, 121, 123 and 125.

The sample-hold circuits 92 and 94 sample and hold the power of the laser output by the CD laser beam 20 detected by the front monitor light receiving device 72. The sample hold circuits 96 and 98 sample and hold the power of the laser output by the DVD laser beam 22 detected by the front monitor light receiving device 73. The servo switches 100, 102, 104 and 106 turn on or off the servo control systems provided by the drive voltage output circuits 84, 86, 88 and 90. When a servo loop is to be formed, that is, when the servo switches 100 and 102 are ON, the setting units 111 and 113 output a reproduction power instruction voltage value V1 for the CD laser diode 50, which is a voltage value for instructing a target value for reproduction power (or non-drawing power), and a recording power instruction voltage value V2 for the CD laser diode 50, which is a voltage value for instructing a target value for recording power (or drawing power). When a servo loop is to be formed, that is, when the servo switches 104 and 106 are ON, the setting units 115 and 117 output a reproduction power instruction voltage value V3 for the DVD laser diode 52, which is a voltage value for instructing a target value for reproduction power (or non-drawing power), and a recording power instruction voltage value V4 for the DVD laser diode 52, which is a voltage value for instructing a target value for recording power (or drawing power). When the servo switches 100, 102, 104 and 106 are ON, the amplifiers 119, 121, 123 and 125 output differential voltages between sample-held values and the power instruction voltage values V1, V2, V3 and V4, respectively.

Since the power of a laser beam used for drawing need not be controlled as strictly as the power of a laser beam used for data recording, as will be explained later, the laser beam used for drawing may also be driven by a fixed drive current, without the forming of a servo loop being required. In this case, the servo switches for a laser beam used for drawing are turned off. That is, when the CD laser beam 20 is used for drawing, the servo switches 100 and 102 are turned off. At this time, the amplifiers 119 and 121 serve as buffer amplifiers and output the fixed voltages V1 and V2. And when the DVD laser beam 22 is used for drawing, the servo switches 104 and 106 are turned off. At this time, the amplifiers 123 and 125 serve as buffer amplifiers and output the fixed voltages V3 and V4.

Switches 127 and 129 are located along the output path for the recording power drive voltage, and are turned on or off in accordance with a signal level of "1" or "0" for a recording pulse or a drawing pulse. Voltage/current converters 131, 133, 135 and 137 convert the differential voltages output by the drive voltage output circuits 84, 86, 88 and 90 into currents proportional to these voltage values. An adder 139 adds the currents output by the voltage/current converters 131 and 133, and drives the CD laser diode 50. An adder 141 adds the currents output by the voltage/current converters 135 and 137, and drives the DVD laser diode 52.

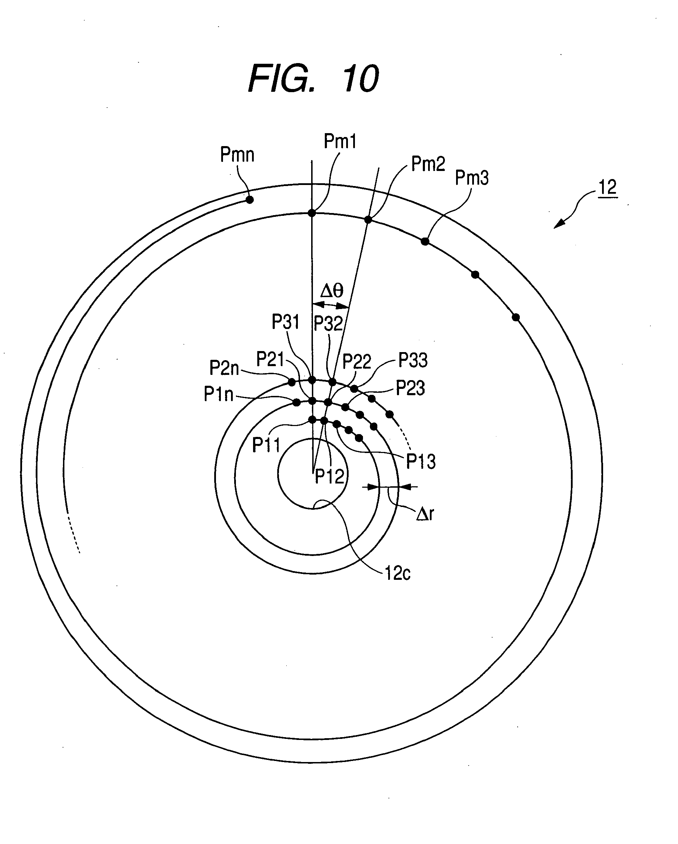

An explanation will now be given for example pixel arrays that form one image to be drawn on the drawing layer of the optical disk 12. Typical, example pixel arrays are shown in Fig. 10, with a center hole 12c of the optical disk 12. In an area in which the track (wobble groove) of the data recording layer is formed, pixels P11, P12, ..., P1n, P21, P22, ..., P2n, ... and Pmn, which form one image, are spirally arranged, at a track pitch of Δr, along the track, beginning at near the center point of the optical disk 12. The circumferential intervals (angles) Δθ of the pixels are constant, and the number n of pixels in one circumference is always constant, regardless of the .radial position. It should be noted that the sides are reversed for an image viewed from the drawing side (the laser incident surface 12a side) and an image viewed from the label surface side 12b. Thus, when an image that is drawn is to be viewed from the label surface 12b of the optical disk 12 (the disk layer structure shown in Fig. 4), the sides of the original pattern of an image to be drawn should be reversed, and the image should be drawn so that the sides are correctly displayed for the viewing side (the label surface 12b side).

Drawing on the drawing layer 26 is performed, beginning with the inner circumference to the outer circumference, during the simultaneous recording/drawing operation, with CAV control being provided for the optical disk 12. That is, during the simultaneous recording/drawing process, the spindle motor 14 is under CAV control, synchronized with a reference clock. Also synchronized with this reference clock, the pulse generator 31 (Fig. 1) sequentially outputs drawing pulses for the pixels P11, P12, ..., P1n, P21, P22, ... P2n, ... and Pmn at a constant velocity (a velocity such that a constant drawing period is allocated for each pixel, and n pixels are drawn during one circumference). At this time, data recording for the data recording layer 36 is also performed, synchronized with a detected wobble signal. Further, using a laser beam employed for the data recording, tracking control is performed for the track (groove 34) of the data recording layer 36. Since the position of the laser beam 20 (or 22) used for drawing and the position of the laser beam 22 (or 20) used for data recording are in a fixed direction along the surface of the optical disk 12, the drawing positions in the radial direction are moved in the outer circumferential direction at the track pitch of Δr. Since the drawing pulses of the individual pixels include duty factors consonant with the tones, drawing is continued using monochromatic multi-tones. In this manner, drawing is sequentially performed every n pixels, at a constant velocity, during one circumference, and is terminated upon the completion of m circumferences. As a result, the individual pixels are drawn at positions as shown in Fig. 10, and form a corresponding image on the face of the optical disk 12.

The power of a laser output by as laser beam used for drawing during the simultaneous recording/drawing process is shown in Fig. 11. That is, the power of the laser is changed so as to correspond to two levels, i.e., a reproduction power (non-drawing power) level and a recording power (drawing power) level, with a constant drawing period allocated for one pixel and a duty factor consonant with the tone data for each pixel. The visible radiation characteristic of the drawing layer is changed by the recording power, and drawing is performed. Further, in accordance with a recording pulse, the power of a laser beam used for data recording is also changed so as to correspond to two levels, i.e., a reproduction power level and a recording power level, and data recording is performed. Since during the simultaneous recording/drawing process recording is performed so that, in the state that the spindle motor 14 is rotated at a CAV, a constant linear density can be obtained, the period for one frame of a recording pulse is shortened as the position is moved nearer the outer circumference. During the simultaneous recording/drawing operation, focusing control is provided based on focusing errors detected by employing the reproductive power of the laser beam used for data recording, and tracking control is provided based on the tracking errors.

The individual operating modes of the optical disk apparatus 10 having the above described configuration will now be described. It should be noted that the exclusive data recording, the simultaneous recording/drawing and the data reproduction are performed from the inner circumference to the outer circumference.

### <<Exclusive data recording for an existing CD-R or a CD-R that includes a drawing layer shown in Fig. 2 or 3>>

The switches 57 and 67 in Fig. 8 are connected to the CD side, and the liquid crystal correction device 53 is not driven. And the servo switches 100 and 102 in Fig. 9 are turned on while the servo switches 104 and 106 are turned off. Thus, the CD laser diode drive circuit 78 is rendered active, and the DVD laser diode drive circuit 80 is halted (the DVD laser diode 52 is OFF). The switch 127 is turned on or off in accordance with a signal level of "1" or "0" for a recording pulse. Therefore, when the signal level of the recording pulse is "1 ", the CD laser diode 50 is driven by a current obtained by adding the currents output by the voltage/current converters 131 and 133, and when the signal level of the recording pulse is "0", the CD laser diode 50 is driven only by the current output by the voltage/current converter 131. At this time, the sample-hold circuit 94 samples and holds the power of the laser, when the signal level of the recording pulse is "1 ", which is detected by the front monitor light receiving device 72, and the sample-hold circuit 92 samples and holds the power of the laser detected when the signal level of the recording pulse is "0". The amplifier 119 adjusts the power of the laser detected when the signal level of the recording pulse is "0" to the power that corresponds to an appropriate reproduction power instruction voltage value V1, which has been set for the setting unit 111. And the amplifier 121 adjusts the power of the laser that is detected when the signal level of the recording pulse is "1" to a power that corresponds to an appropriate reproduction power instruction voltage value V2, which has been set for the setting unit 113. Through this process, data recording is performed in consonance with the recording pulse. The focusing control and tracking control are performed based on light returned for the CD laser beam 20 that is detected when the signal level of the recording pulse is "0" (at the timing for the reproduction power), the thread feeding control for the optical pickup 16 is provided based on the direct-current component of a tracking error signal detected using the CD laser beam 20, and the spindle control is provided by the CLV control that is based on a wobble signal. Further, a recording pulse is generated at a constant bit rate in synchronization with the wobble signal.

### «Data reproduction for an existing CD-R or a CD-R that includes a drawing layer shown in Fig. 2 or 3»

The switches 57 and 67 in Fig. 8 are connected to the CD side, and the liquid crystal correction device 53 is not driven. And the servo switch 100 in Fig. 9 is turned on while the servo switches 102, 104 and 106 are turned off. Thus, the CD laser diode drive circuit 78 is rendered active, and the DVD laser diode drive circuit 80 is halted (the DVD laser diode 52 is OFF). The switches 127 and 129 are always set OFF, and the CD laser diode 50 is sequentially driven only by the current output by the voltage/current converter 131. At this time, at a predetermined cycle, the sample-hold circuit 92 samples and holds the power of the laser detected by the front monitor light receiving device 72, and the amplifier 119 adjusts the power of the laser to the power that corresponds to an appropriate reproduction power instruction voltage value V1, which has been set for the setting unit 111. Through this process, data reproduction is performed. The focusing control and tracking control are provided based on light returned for the CD laser beam 20, the thread feeding control for the optical pickup 16 is provided based on the direct-current component of a tracking error signal detected using the CD laser beam 20, and the spindle control is provided by the CLV control that is based on a wobble signal or a reproduction clock.

### <<Exclusive data recording for an existing DVD-R(+R) or a DVD-R(+R) that includes a drawing layer shown in Fig. 4>>

The switches 57 and 67 in Fig. 8 are connected to the DVD side, and the liquid crystal correction device 53 is not driven. And the servo switches 104 and 106 in Fig. 9 are turned on while the servo switches 100 and 102 are turned off. Thus, the DVD laser diode drive circuit 80 is rendered active, and the CD laser diode drive circuit 78 is halted (the CD laser diode 50 is OFF). The switch 129 is turned on or off in accordance with the signal level "1" or "0" of a recording pulse, and therefore, when the recording pulse signal level is "1", the DVD laser diode 52 is driven by a current obtained by adding the currents output by the voltage/current converters 135 and 137, and when the recording pulse signal level is "0", the DVD laser diode 52 is driven only by the current output by the voltage/current converter 135. At this time, the sample-hold circuit 98 samples and holds the power of the laser, when the signal level of the recording pulse is "1", which is detected by the front monitor light receiving device 73, and the sample-hold circuit 96 samples and holds the power of the laser detected when the signal level of the recording pulse is "0". The amplifier 123 adjusts the power of the laser that is detected when the signal level of the recording pulse is "0" to a power that corresponds to an appropriate reproduction power instruction voltage value V3, which has been set for the setting unit 115, and the amplifier 125 adjusts the laser power that is detected when the signal level of the recording pulse is "1" to a power that corresponds to an appropriate reproduction power instruction voltage value V4, which has been set for the setting unit 117. Through this process, data recording is performed in consonance with the recording pulse. The focusing control and tracking control are provided based on light returned for the DVD laser beam 22 that is detected when the signal level of the recording pulse is "0" (at the timing for the reproduction power), the thread feeding control for the optical pickup 16 is provided based on the direct-current component of a tracking error signal detected using the DVD laser beam 22, and the spindle control is performed by the CLV control based on a wobble signal. Further, a recording pulse is generated at a constant bit rate in synchronization with the wobble signal.

### <<Data reproduction for an existing DVD-R(+R) or a DVD-R(+R) that includes a drawing layer shown in Fig. 4>>

The switches 57 and 67 in Fig. 8 are connected to the DVD side, and the liquid crystal correction device 53 is not driven. The servo switch 104 in Fig. 9 is turned on, while the servo switches 100, 102 and 106 are turned off. Thus, the DVD laser diode drive circuit 80 is rendered active and the CD laser diode drive circuit 78 is halted (the CD laser diode 50 is OFF). The switches 127 and 129 are always set OFF, and the DVD laser diode 52 is sequentially driven only by a current output by the voltage/current converter 135. At this time, at a predetermined cycle, the sample-hold circuit 96 samples and holds the power of the laser detected by the front monitor light receiving device 73 and the amplifier 123 adjusts the power of the laser to one that corresponds to an appropriate reproduction power instruction voltage value V3, which has been set for the setting unit 115. Through this process, data reproduction is performed, the focusing control and tracking control are provided based on light that is returned for the DVD laser beam 22, and the thread feeding control of the optical pickup 16 is provided based on the direct-current component of a tracking error signal detected while using the DVD laser beam 22. The spindle control is provided by the CLV control based on a wobble signal or a reproduction clock.

### <<Simultaneous recording/drawing (initial adjustment) for a CD-R that includes a drawing layer shown in Fig. 2 or 3, or for a DVD-R(+R) that includes a drawing layer shown in Fig. 4>>

Before simultaneous recording/drawing is performed, the liquid crystal correction device 53 adjusts the inter-focusing distance between the CD laser beam 20 and the DVD laser beam 22. This adjustment is performed, for example, as follows. The optical disk 12 is loaded into the optical disk apparatus 10 and the optical pickup 16 is moved to the area where the data recording layer 36 and the drawing layer 26 are laminated. Then, the servo switch 104 in Fig. 9 is turned on, the servo switches 100, 102 and 106 are turned off, the switches 127 and 129 are turned on, and the DVD laser diode 52 is sequentially driven by the reproduction power (only by a current output by the voltage/current converter 135). In this state, the switch 57 in Fig. 8 is connected to the DVD side, the focusing actuator 74 is driven by a servo loop that employs a focusing error signal detected from the returned light signal for the DVD laser beam 22, and focusing control is performed for a layer located at a position corresponding to the data recording layer of a DVD, i.e., either the drawing layer 26 of a CD-R that includes a drawing layer shown in Fig. 2 or 3, or the data recording layer 36 of a DVD-R(+R) that includes a drawing layer shown in Fig. 4.

When the focal status is obtained through focusing control, the servo switch 100 in Fig. 9 is turned on while the focal status is maintained, that is, the focusing servo is maintained ON, and then, the CD laser diode 50 is sequentially driven by the reproduction power, that is, the CD laser diode 50 is driven only by a current output by the voltage/current converter 131. At this time, the switch 61 in Fig. 8 is connected to the CD side, the switch 63 is connected to the contact point B, the liquid crystal correction device 53 is driven by a servo loop that employs a focusing error signal detected from the returned light of the CD laser beam 20, and focusing control is provided for a layer located at a position corresponding to the data recording layer of a CD, i.e., either the data recording layer 36 for a CD-R that includes a drawing layer shown in Fig. 2 or 3, or the drawing layer 26 for a DVD-R(+R) that includes a drawing layer shown in Fig. 4. When a desired focal status has been obtained by focusing control, i.e., when an in-focus state, or only a slightly defocused state, is acquired and an appropriate beam spot diameter is obtained for drawing, it is assumed that the inter-focusing distance between the two laser beams 20 and 22 on the optical disk 12 has been adjusted and is equal to a distance between the data recording layer 36 and the drawing layer 26. Therefore, the A/D converter 51 in Fig. 8 converts the current adjustment value, which is the drive value for the liquid crystal correction device 53, into digital data, and stores the digital data in the controller 19. Following this, the switch 63 is connected to the contact point C, and the controller 19 performs a D/A conversion for the drive voltage data that is stored and transmits the thus obtained fixed voltage to the contact point C of the switch 63. Thereafter, until the simultaneous recording/drawing operation has been completed, the liquid crystal correction device 53 is driven at this fixed voltage, and the adjusted inter-focusing distance between the two laser beams 20 and 22 is maintained. Thereafter, the initial adjustment performed for the simultaneous recording/drawing operation is terminated.

### <<Simultaneous recording/drawing for a CD-R that includes a drawing layer shown in Fig. 2 or 3 (execution of simultaneous recording/drawing)>>

The switch 57 in Fig. 8 is connected to the CD side, the focusing actuator 74 is driven by a servo loop that employs a focusing error signal detected from the returned light signal for the CD laser beam 20, and focusing control is performed for the data recording layer 36. Also, the switch 67 is connected to the CD side, the tracking actuator 76 is driven by a servo loop that employs a tracking error signal detected from the returned light signal for the CD laser beam 20, and tracking control is provided for the data recording layer 36. Further, the thread feeding motor 11 is driven by a servo loop that employs the direct-current component of a tracking error signal detected by the direct-current component detection circuit 75, and thread feeding control is provided. The spindle control is provided in accordance with the CAV control, whereby the spindle motor 14 is driven to synchronize an FG pulse with a predetermined reference clock. Further, a drawing pulse is generated at a constant bit rate, synchronized with the reference clock, and a recording pulse is generated at a constant bit pulse, synchronized with a wobble signal. Therefore, data recording and drawing are correctly and simultaneously performed.

During the simultaneous recording/drawing operation, all of the servo switches 100, 102, 104 and 106 in Fig. 9 are turned on and the switch 127 is turned on or off, in accordance with the signal level "1" or "0" of a recording pulse. At the time the recording pulse signal level is "1", the CD laser diode 50 is driven by a current obtained by adding the currents output by the voltage/current converters 131 and 133. At the time the recording pulse signal level is "0", the CD laser diode 50 is driven only by the current output by the voltage/current converter 131. At this time, the sample-hold circuit 94 samples and holds the power of the laser that is detected by the front monitor light receiving device 72 when the recording pulse signal level is "1 ", and the sample-hold circuit 92 samples and holds the power of the laser that is detected when the recording pulse signal level is "0". The amplifier 119 adjusts the power for the laser that is detected when the recording pulse signal level is "0" to the power that corresponds to an appropriate reproduction power instruction voltage value V1, which has been set for the setting unit 111. The amplifier 121 adjusts the laser power that is detected when the recording pulse signal level is "1" to the power that corresponds to an appropriate reproduction power instruction voltage value V2, which has been set for the setting unit 113. Through this process, data recording is performed in consonance with the recording pulse, and the focusing control and tracking control are provided based on returned light for the CD laser beam 20 that is detected when the recording pulse signal level is "0", that is, at the timing of the reproduction power.

During the simultaneous recording/drawing operation, in parallel to the data recording, the switch 129 is turned on or off in accordance with a signal level of "1" or "0" for a drawing pulse. At the time the drawing pulse signal level is "1", the DVD laser diode 52 is driven by a current obtained by adding the currents output by the voltage/current converters 135 and 137. And at the time the drawing pulse signal level is "0", the DVD laser diode 52 is driven only by a current output by the voltage/current converter 135. At this time, the sample-hold circuit 98 samples and holds the power of the laser that is detected by the front monitor light receiving device 73 when the drawing pulse signal level is "1 ", and the sample-hold circuit 96 samples and holds the power of the laser that is detected when the drawing pulse signal level is "0". The amplifier 123 adjusts the power of the laser that is detected when the drawing pulse signal level is "0" to a power that corresponds to an appropriate reproduction power (a non-drawing power) instruction voltage value V3, which has been set for the setting unit 115. The amplifier 125 adjusts the power of the laser that is detected when the drawing pulse signal level is "1" to a power that corresponds to an appropriate reproduction power (a non-drawing power) instruction voltage value V4, which has been set for the setting unit 117. Thus, drawing is performed in consonance with the drawing pulse. Since the power of a laser beam used for drawing need not be controlled as strictly as the power of a laser beam used for data recording, the laser beam used for drawing (the DVD laser beam 22 in this case) may be driven by a fixed drive current {a drive current for reproduction (a non-drawing) power, or a drive current for recording (a drawing) power}, without the forming of a servo loop being required. At this time, the servo switches 104 and 106 are turned off, and the amplifiers 123 and 125 serve as buffer amplifiers that output the fixed voltages V3 and V4, respectively.

The focal states in the simultaneous recording/drawing operation are as shown in Figs. 2 and 3. That is, the CD laser beam 20 is focused on the data recording layer 36 and the DVD laser beam 22 is focused on the drawing layer 26. Since the DVD laser beam 22 is moved in the radial direction of the optical disk 12 together with the CD laser beam 20 that is under the tracking control, drawing is performed with a density, in a radial direction, that corresponds to the track pitch.

### <<Simultaneous recording/drawing for a DVD-R(+R) that includes a drawing layer shown in Fig. 4 (execution of simultaneous recording/drawing)>>

The switch 57 in Fig. 8 is connected to the DVD side, the focusing actuator 74 is driven by a servo loop that employs a focusing error signal detected from the returned light signal for the DVD laser beam 22, and focusing control is performed for the data recording layer 36. Also, the switch 67 is connected to the DVD side, the tracking actuator 76 is driven by a servo loop that employs a tracking error signal detected from the returned light signal for the DVD laser beam 22, and tracking control is provided for the data recording layer 36. Further, the thread feeding motor 11 is driven by a servo loop that employs the direct-current component of a tracking error signal detected by the direct-current component detection circuit 75, and thread feeding control is provided. The spindle control is provided in accordance with the CAV control, whereby the spindle motor 14 is driven to synchronize an FG pulse with a predetermined reference clock. Further, a drawing pulse is generated at a constant bit rate, synchronized with the reference clock, and a recording pulse is generated at a constant bit pulse, synchronized with a wobble signal. Therefore, data recording and drawing are correctly and simultaneously performed.

During the simultaneous recording/drawing operation, all of the servo switches 100, 102, 104 and 106 in Fig. 9 are turned on and the switch 129 is turned on or off, in accordance with the signal level "1" or "0" of a recording pulse. At the time the recording pulse signal level is "1 ", the DVD laser diode 52 is driven by a current obtained by adding the currents output by the voltage/current converters 135 and 137. At the time the recording pulse signal level is "0", the DVD laser diode 52 is driven only by the current output by the voltage/current converter 135. At this time, the sample-hold circuit 98 samples and holds the power of the laser that is detected by the front monitor light receiving device 73 when the recording pulse signal level is "1 ", and the sample-hold circuit 96 samples and holds the power of the laser that is detected when the recording pulse signal level is "0". The amplifier 123 adjusts the power for the laser that is detected when the recording pulse signal level is "0" to the power that corresponds to an appropriate reproduction power instruction voltage value V3, which has been set for the setting unit 115. The amplifier 124 adjusts the laser power that is detected when the recording pulse signal level is "1" to the power that corresponds to an appropriate reproduction power instruction voltage value V4, which has been set for the setting unit 117. Through this process, data recording is performed in consonance with the recording pulse, and the focusing control and tracking control are provided based on returned light for the DVD laser beam 22 that is detected when the recording pulse signal level is "0", that is, at the timing of the reproduction power.

During the simultaneous recording/drawing operation, in parallel to the data recording, the switch 127 is turned on or off in accordance with a signal level of "1" or "0" for a drawing pulse. At the time the drawing pulse signal level is "1", the CD laser diode 50 is driven by a current obtained by adding the currents output by the voltage/current converters 131 and 133. And at the time the drawing pulse signal level is "0", the CD laser diode 50 is driven only by a current output by the voltage/current converter 131. At this time, the sample-hold circuit 94 samples and holds the power of the laser that is detected by the front monitor light receiving device 72 when the drawing pulse signal level is "1", and the sample-hold circuit 92 samples and holds the power of the laser that is detected when the drawing pulse signal level is "0". The amplifier 119 adjusts the power of the laser that is detected when the drawing pulse signal level is "0" to a power that corresponds to an appropriate reproduction power (a non-drawing power) instruction voltage value V1, which has been set for the setting unit 111. The amplifier 121 adjusts the power of the laser that is detected when the drawing pulse signal level is "1" to a power that corresponds to an appropriate reproduction power (a non-drawing power) instruction voltage value V2, which has been set for the setting unit 113. Thus, drawing is performed in consonance with the drawing pulse. Since the power of a laser beam used for drawing need not be controlled as strictly as the power of a laser beam used for data recording, the laser beam used for drawing (the CD laser beam 20 in this case) may be driven by a fixed drive current {a drive current for reproduction (a non-drawing) power, or a drive current for recording (a drawing) power}, without the forming of a servo loop being required. At this time, the servo switches 100 and 102 are turned off, and the amplifiers 119 and 121 serve as buffer amplifiers that outputs the fixed voltages V1 and V2, respectively.

The focal states in the simultaneous recording/drawing operation are as shown in Fig. 4. That is, the DVD laser beam 22 is focused on the data recording layer 36 and the CD laser beam 20 is focused on the drawing layer 26. Since the CD laser beam 20 is moved in the radial direction of the optical disk 12 together with the DVD laser beam 22 that is under the tracking control, drawing is performed with a density, in a radial direction, that corresponds to the track pitch.

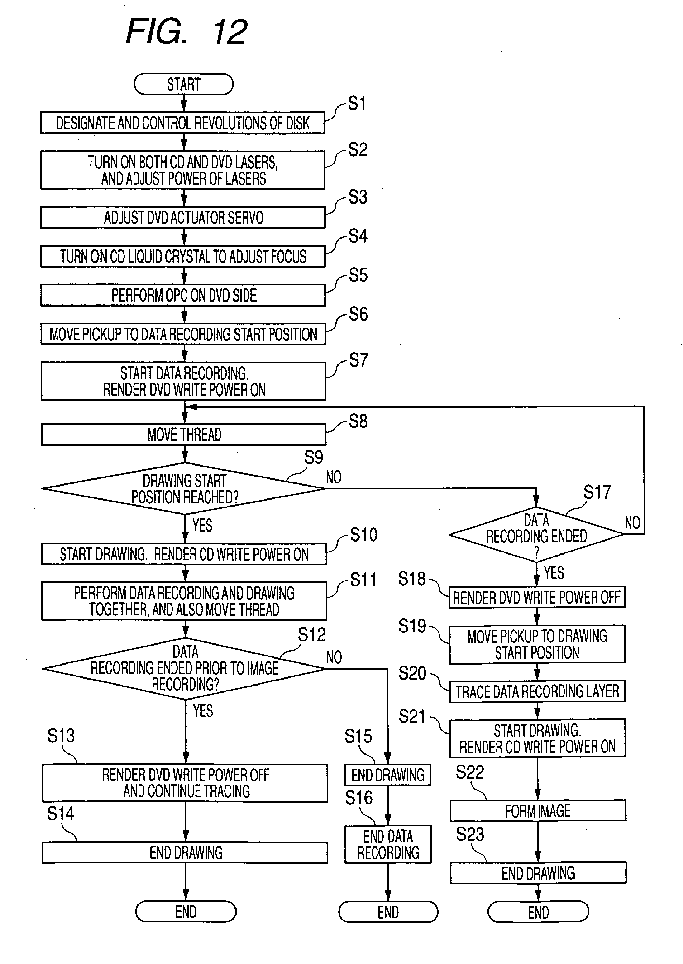

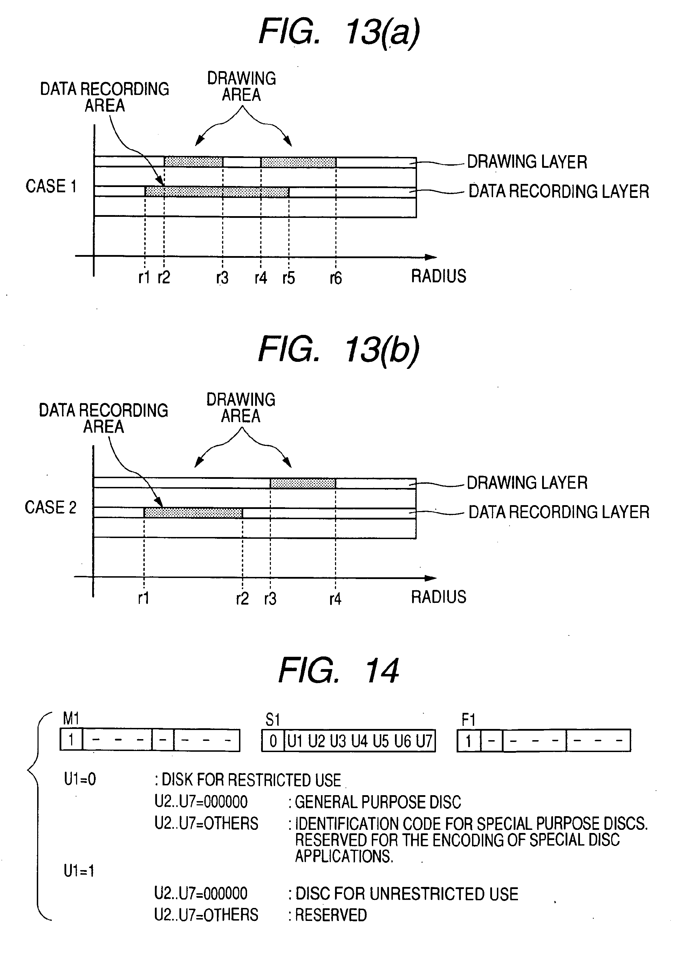

The simultaneous recording/drawing processing will now be described while referring to Fig. 12. For the processing in Fig. 12, it is assumed that a DVD-R(+R) that includes a drawing layer in Fig. 4 is employed for data recording using the DVD laser beam 22, and performs drawing using the CD laser beam 20. Further, two simultaneous recording/drawing cases shown in Fig. 13 are taken into account for the processing in Fig. 12. In either case, data recording is performed in a DAO (Disk at Once) manner. In case 1 in Fig. 13A, first, data recording is begun at a radius r1 and during the course of the data recording, drawing is started at a radius r2; data recording and drawing are then performed in parallel, at an interval, from the radius r2 to a radius r5 (drawing is halted for an interval between a radius r3 and a radius r4); and first, at the radius r5, the data recording is ended and thereafter, at a radius r6, the drawing is ended. At an interval extending from the radius r5 to the radius r6, only drawing is performed; however, since tracking control must be continued for this interval, the DVD laser beam 22 is driven by reproduction power. In case 2 in Fig. 13B, data recording is performed from a radius r1 to a radius r2, and thereafter, drawing is performed from a radius r3 to a radius r4. Only drawing is performed from the radius r3 to the radius r4; however, since tracking control must be continued for this interval, the DVD laser beam 22 is driven by reproduction power from the end of the data recording, at the radius r2, to the end of the drawing, at the radius r4.

The processing in Fig. 12 will be described. First, the number of rotations of the optical disk 12 at the time of simultaneous recording/drawing is set, and the number of rotations of the spindle motor 14 is adjusted to this value by CAV control (S1). Following this, the laser beams 20 and 22 are turned on to control laser power (S2). That is, for the DVD laser beam 22, the laser power is detected by the front monitor light receiving device 73 (Figs. 5 and 9), and a drive current for the DVD laser beam 22 is adjusted to obtain a predetermined reproduction power and a predetermined recording power. In this state, data recording is begun, and a servo loop should also be employed during the data recording, so that the predetermined reproduction power and recording power are maintained by ALPC control. For the CD laser beam 20, the laser power is detected by the front monitor light receiving device 72 (Figs. 5 and 9), and a drive current for the CD laser beam 20 is adjusted to obtain a predetermined reproduction power (a non-drawing power) and a predetermined recording power (a drawing power). In this state, the drawing is begun, and a servo loop should also be employed during the drawing, so that the predetermined reproduction power (the non-drawing power) and the recording power (the drawing power) are maintained by the ALPC control.

Sequentially, focusing control and tracking control for the DVD laser beam 22 are rendered on (S3). When the focusing control and the tracking control enter the locked state, the liquid crystal correction device 53 is driven based on focusing errors detected from the CD laser beam 22, and adjusts the inter-focusing distance between the CD laser beam 20 and the DVD laser beam 22 (S4). When this adjustment has been completed, the obtained inter-focusing distance is maintained until the simultaneous recording/drawing operation is terminated. Then, an OPC (Optimum Power Control) process is performed using the DVD laser beam 22 to obtain the optimal recording power to be used for data recording (S5). At this time, the CD laser beam 20 may be driven in accordance with an appropriate drawing pulse, so that the OPC process can be performed in a situation similar to the state that the simultaneous recording/drawing operation is being performed. When the optimal recording power is obtained, the optical pickup 16 is moved to a data recording start position (S6). The OPC process need not be performed for the CD laser beam 20 because simply drawing is required, and a fixed recording power (a drawing power) is used. When the optimal recording power has been obtained, this recording power value is set, and data recording is initiated at the data recording start position (the radius r1 position in Fig. 13A or 13B) (S7). As data recording is continued, the optical pickup 16 is sequentially moved toward the outer circumference of the optical disk 12 by the thread feeding control (S8).

Thereafter, when a drawing start position is reached (S9) (radius r2 in Fig. 13A), the power of the CD laser beam 20 is modulated using the drawing pulse, and the drawing is begun (S10). Then, both data recording and drawing are performed, and as both operations are continued, the optical pickup 16 is sequentially moved toward the outer circumference of the optical disk 12 by thread feeding control, based on the DVD laser beam 22 (S11). When data recording has been completed prior to the drawing (YES at S12) (at the radius r5 in Fig. 13A), the recording power of the DVD laser beam 22 is turned off at the end of the data recording, and tracking control is continued using reproduction power (S13). Then, when the drawing has been completed (S14) (at the radius r6 in Fig. 13A), all the processing is terminated. But when the drawing is completed before the data recording (NO at S12), the CD laser beam 20 is turned off at the end of the drawing (S15), and thereafter, the DVD laser beam 22 is turned off at the end of the data recording. Then, all the processing is terminated (S16).

When data recording has been completed (YES at S17) before the drawing start position is reached (NO at S9) (at the radius r2 in Fig. 13B), the recording power of the DVD laser beam 22 is turned off at the end of the data recording (S18). And sequentially, the optical pickup 16 is moved to the drawing start position (S19) (at the radius r3 in Fig. 13B), and tracking control for the data recording layer 36 is performed by using the DVD laser beam 22 only with reproduction power (S20). Then, drawing is started using the CD laser beam 20 (S21) to form an image (S22). When the drawing has been completed (S23) (at the radius r4 in Fig. 13B), all the processing is terminated.

For this explanation, a DVD-R(+R) has been employed that includes a drawing layer shown in Fig. 4, and data recording using the DVD laser beam 22 and drawing using the CD laser beam 20 have been performed. When a CD-R that includes a drawing layer shown in Fig. 2 or 3 is employed to perform data recording using the CD laser beam 20 and to perform drawing using the DVD laser beam 22, the processes following step S5 in Fig. 12 that are related to a DVD and those that are related to a CD need only be reversed.

Furthermore, in the above description, the inter-focusing distance between the two laser beams 20 and 22 has been initially adjusted prior to the simultaneous recording/drawing operation, and this adjusted distance has been maintained throughout the simultaneous recording/drawing operation. However, instead of this example, the liquid crystal correction device 53 may be driven, so that during the simultaneous recording/drawing operation, the direct-current component detection circuit 79 (the broken lines in Fig. 8) detects the direct-current components of focusing error signals for a laser beam that is not used for focusing control, and transmits the direct-current components to the contact point A of the switch 63, which is connected to the contact point A for canceling these direct-current components.

In addition, in this mode, the liquid crystal correction device 53 has been arranged along the optical axis of the CD laser beam 20. However, the liquid crystal correction device 53 may also be arranged along the optical axis of the DVD laser beam 22. Table 1 shows the control contents when the liquid crystal correction device 53 is arranged along the optical axis of the CD laser beam 20 and when it is arranged along the optical axis of the DVD laser beam 22.

**Table 1**

| Condition | Position of an optical axis along which a liquid crystal correction device is arranged | | CD optical axis | | | | DVD optical axis | | | |
|---|---|---|---|---|---|---|---|---|---|---|
| | Data recording layer | | CD layer | DVD layer | CD layer | DVD layer | CD layer | DVD layer | CD layer | DVD layer |
| | Drawing layer | | DVD layer | CD layer | No drawing | No drawing | DVD layer | CD layer | No drawing | No drawing |
| Focusing control at the initial adjustment of an inter-focusing distance | | Control by a focusing actuator (using light, along the optical axis of which a liquid crystal correction device is not arranged) | DVD light | DVD light | No | No | CD light | CD light | No | No |
| | | Control provided by a liquid crystal correction device (using light, along the optical axis of which a liquid crystal correction device is arranged) | CD light | CD light | No | No | DVD light | DVD light | No | No |
| Focusing control during a simultaneous recording/drawing operation | | Control provided by a focusing actuator (using data recording light) | CD light | DVD light | CD light | DVD light | CD light | DVD light | CD light | DVD light |
| | | Control provided by a liquid crystal correction device | Hold | Hold | No | No | Hold | Hold | No | No |
| Tracking control (using data recording light) | | | CD light | DVD light | CD light | DVD light | CD light | DVD light | CD light | DVD light |
| Thread feeding control (using tracking error detection light) | | | CD light | DVD light | CD light | DVD light | CD light | DVD light | CD light | DVD light |
| Spindle control | | | CAV | CAV | CLV | CLV | CAV | CAV | CLV | CLV |

Before drawing is performed on the face of an optical disk, whether the optical disk is a drawable type should be determined. An example determination method will be described. According to this method, identification information (drawable disk identification information), indicating that an optical disk is a drawable disk, is additionally defined and recorded on the data recording layer of the optical disk 12, and when an optical disk is inserted into the optical disk apparatus 10 (Fig. 1), whether the optical pickup 16 can read the drawable disk identification information is used to determine if the inserted optical disk is a drawable type.

### <<Example definition of drawable disk identification information for a CD-R that includes a drawing layer>>

Drawable disk identification information can be recorded using ATIP undefined code recorded on the pre-groove of the data recording layer. The ATIP data structure is shown in Fig. 14. When "U1" = "1" is defined in this data structure, drawable disk identification information can be entered in U2 to U7. For example, "U1 to U7" = "1010101" can be defined as drawable disk identification information.

### <<Example definition of drawable disk identification information for a DVD-R(+R) that includes a drawing layer>>

For a DVD-R, land pre-pit undefined code for a data recording layer can be employed to record the drawable disk identification information. For a DVD+R, ADIP undefined code for a data recording layer can be employed to record drawable disk identification information.

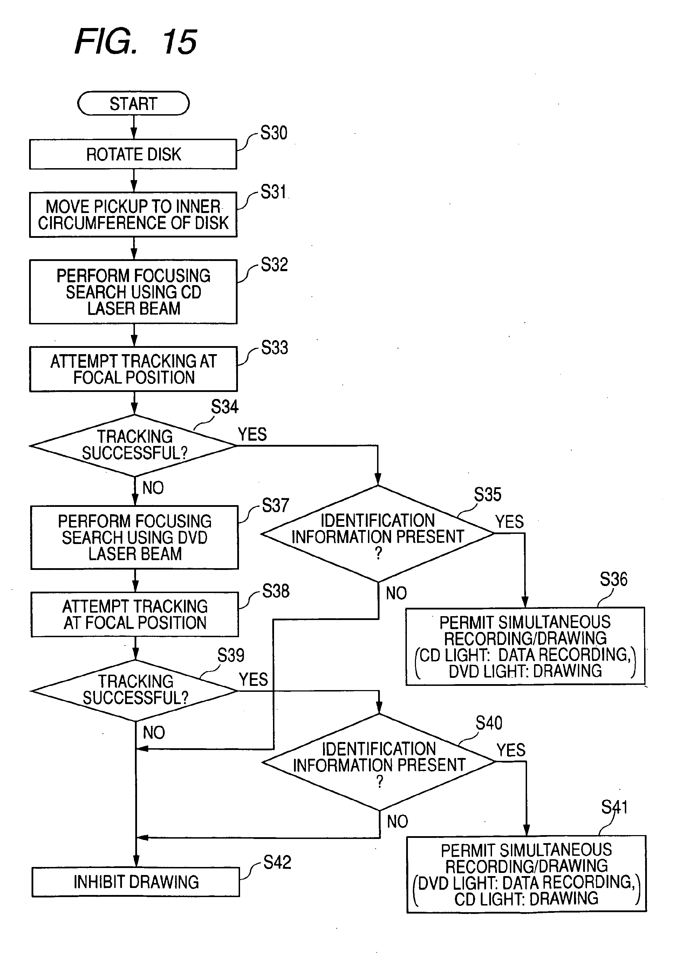

Fig. 15 is a flowchart showing the drawable disk determination processing performed by the optical disk apparatus 10 when the drawable disk identification information is recorded on a data recording layer in the above described manner. This processing is performed prior to the processing in Fig. 12. When the optical disk 12 is loaded into the optical disk apparatus 10, the spindle motor 14 is rotated (S30) and the optical pickup 16 is moved toward the inner circumference of the optical disk 12 (toward the position in the radial direction at which ATIP information and drawable disk identification information are recorded) (S31). When the optical pickup 16 has reached the area along the inner circumferential portion of the optical disk 12, the CD laser beam 20 is turned on using reproduction power (the DVD laser beam 22 is off), and a focusing search is performed to focus the CD laser beam 20 on a layer whereat the greatest amplitude value for a focusing error can be obtained (this layer is assumed to be positioned as the data recording layer of a CD) (S32). Sequentially, then, tracking is attempted at the focal position (S33), and when the tracking is successful (YES at S34), information, such as ATIP information, that is read from the track is employed to determine whether drawable disk identification information is present. When the drawable disk identification information is obtained (YES at S35), simultaneous recording/drawing (performing data recording using the CD laser beam 20, while performing drawing using the DVD laser beam 22) is permitted (S36). When tracking is successful at the focal position (YES at S34), but drawable disk identification information is not obtained from the information read from the track (NO at S35), it is determined that the current optical disk 12 is not a drawable disk and drawing is inhibited (S42).

When tracking is disabled at the focal position (NO at S34), it is assumed that a layer at the focal position is a drawing layer without a track, the DVD laser beam 22 is turned on using reproduction power (the CD laser beam 20 is turned off), and a focusing search is performed to focus the DVD laser beam 22 on a layer where the greatest amplitude value for a focusing error can be obtained (this layer is assumed to be positioned as the data recording layer of a DVD) (S37). Sequentially, then, tracking is attempted at the focal position (S38), and when the tracking is successful (YES at S39), information such as land pre-pit information or ADIP information that is read from the track is employed to determine whether drawable disk identification information is present. When drawable disk identification information is obtained (YES at S40), simultaneous recording/drawing (performing data recording using the DVD laser beam 22, while performing drawing using the CD laser beam 20) is permitted (S41). When tracking is successful at the focal position (YES at S39), but drawable disk identification information is not obtained from information read from the track (NO at S40), it is determined that the current optical disk 12 is not a drawable disk, and drawing is inhibited (S42). And when tracking is disabled at the focal position (NO at S39) it is assumed that the optical disk 12 is neither a CD standard disk nor a DVD standard disk, and drawing is also inhibited (S42).

In this mode, through the emission by an optical pickup of a CD laser beam and a DVD laser beam, drawing has been performed for a CD-R that includes a drawing layer and for a DVD-R(+R) that includes one. However, the present invention can be applied in other cases. For example, this invention can be applied in a case that a CD laser beam and a BD (blue disk) laser beam are emitted by an optical pickup to perform drawing for a CD-R that includes a drawing layer and for a BD-R that includes one. The present invention can also be applied in a case that a DVD laser beam and a BD (blue disk) laser beam are emitted by an optical pickup to perform drawing for a DVD-R(+R) that includes a drawing layer and a BD-R that includes one.

## Claims

1. A method of simultaneously recording data and forming a visible image on an optical disk which includes a data recording layer and a drawing layer which is arranged at a position different from the data recording layer in a thickness direction, the method comprising
emitting two beams through an objective lens of an optical pickup to the data recording layer and the drawing layer so that focal points of the two beams are shifted relative to each other in an axial direction of the beams;
detecting focal states of the two beams on the data recording layer and the drawing layer;
adjusting a distance between the focal points of the two beams by an inter-focusing distance adjustment mechanism based on the detected focal states;
performing focus control by a focus adjustment mechanism which is provided in the optical pickup and moves the objective lens in the axial direction based on one of the two beams in a state that the distance between the focal points of the two beams is adjusted by the inter-focusing distance adjustment mechanism; and
simultaneously recording the data on the data recording layer and forming the visible image on the drawing layer by two beams.

2. The method according to claim 1, wherein
the distance between the focal points of the two beams is adjusted before the data recording and the visible image forming are performed, and
during the data recording and the visible image forming, the distance between the focal points of the two beams is maintained as a value obtained prior to the performance of the data recording and the visible image forming.

3. The method according to claim 1, wherein the distance between the focal points of the two beams is adjusted during the data recording and the visible image forming.

4. The method according to any one of claims 1 to 3, wherein the inter-focusing distance adjustment mechanism adjusts the distance between the focal points of the two beams so that one of the two beams is focused on one of the data recording layer and the drawing layer in a desired state while the focusing adjustment mechanism focuses the other beam on the other of the data recording layer and the drawing layer.

5. The method according to any one of claims 1 to 4, wherein the focusing adjustment mechanism performs the focusing control using the beam emitted for the data recording during the data recording and the visible image forming.

6. The method according to any one of claims 1 to 5, wherein tracking control is performed using the beam emitted for the data recording during the data recording and the visible image forming.

7. The method according to any one of claims 1 to 6, wherein during the data recording and the visible image forming, reproduction power and recording power are detected for the two beams and servo loop is formed so that predetermined values for the reproduction power and the recording power of the two beams are maintained.

8. The method according to any one of claims 1 to 6, wherein during the data recording and the visible image forming, reproduction power and recording power are detected for the beam emitted for the data recording and a servo loop is formed so that predetermined values for the reproduction power and the recording power for the beam are maintained, and fixed driven values are employed for reproduction power and recording power for the beam emitted to the visible image forming without forming a servo loop.

9. An optical disk recording/drawing apparatus for simultaneously recording data and forming a visible image on an optical disk which includes a data recording layer and a drawing layer which is arranged at a position different from the data recording layer in a thickness direction, the apparatus comprising:
an optical pickup including
an objective lens which passes two beams whose focal points are shifted relative to each other in an axial direction thereof,
a focusing adjustment mechanism that moves the objective lens in the light axial direction to perform focusing adjustment, and
an inter-focusing distance adjustment mechanism that adjusts a distance between focal points of the two beams;
a focusing control circuit that controls the focusing adjustment mechanism for performing focusing control;
an inter-focusing distance adjustment circuit that controls the inter-focusing distance adjustment mechanism for adjusting the distance between the focal points of the two beams; and
a controller that controls the optical pickup, the focusing control circuit and the inter-focusing distance adjustment circuit in such a manner that the optical pickup emits the two beams to the data recording layer and the drawing layer, the inter-focusing distance adjustment circuit controls the inter-focusing distance adjustment mechanism to adjust the distance between the focal points of the two beams by detecting focal states of the two beams, and the focusing control circuit controls the focusing adjustment mechanism to perform the focus control based on one of the two beams in a state that the distance between the focal points of the two beams is adjusted by the inter-focusing distance adjustment mechanism.

10. The apparatus according to claim 9, wherein the inter-focusing distance adjustment mechanism includes a liquid crystal optical device arranged along a light axis of a beam that is not used for focusing control during the data recording and the visible image forming.

11. The apparatus according to claim 9 or 10, wherein
the controller performs CAV control for a spindle motor so that an FG pulse generated by the spindle motor is synchronized with a predetermined reference clock, and
the controller generates a drawing pulse for modulating the beam for the visible image forming in synchronization with the reference clock, and a recording pulse for modulating the beam for the data recording in synchronization with a wobble signal that is detected from the optical disk.

12. The apparatus according to one of claims 9 to 10, wherein
the controller permits a drawing operation on the drawing layer with a condition that identification information representing the optical disk that includes a drawing layer is obtained from information recorded on the data recording layer, and
the controller inhibits the drawing operation with a condition that the identification cannot be obtained from information recorded on the data recording layer.

13. The apparatus according to one of claims 9 to 12, wherein the apparatus is capable of recording data while one of the two beams is employed for the focusing control and tracking control for the data recording layer when the optical disk includes the data recording layer and does not include the drawing layer.
